# FASCICULE DE BREVET EUROPEEN

(11) **EP 3 368 350 B1**
(45) Date de publication et mention de la délivrance du brevet: **24.06.2020**
(21) Numéro de dépôt: 16785514.7
(22) Date de dépôt: 26.10.2016
(51) Int. Cl.: B60C 11/12, B60C 11/04, B60C 9/00, B60C 9/22, B60C 9/20, B60C 11/03

(54) **PNEUMATIQUE À COUCHES DE TRAVAIL COMPRENANT DES MONOFILAMENTS ET À BANDE DE ROULEMENT RAINURÉE**
LUFTREIFEN MIT ARBEITSSCHICHTEN MIT MONOFILAMENTEN UND REIFENPROFIL MIT NUTEN
PNEUMATIC TIRE, HAVING WORKING LAYERS COMPRISING MONOFILAMENTS AND A TIRE TREAD WITH GROOVES

(30) Priorité: 27.10.2015 FR 1560236
(43) Date de publication de la demande: 05.09.2018
(73) Titulaire: Compagnie Générale des Etablissements Michelin, 63000 Clermont-Ferrand (FR)
(72) Inventeur: BONNET, Aymeric, 63040 Clermont-Ferrand Cedex 9 (FR); MOREL-JEAN, Jacques, 63040 Clermont-Ferrand Cedex 9 (FR); DEROBERT-MAZURE, Jean-Charles, 63040 Clermont-Ferrand Cedex 9 (FR)
(74) Mandataire: Millanvois, Patrick Jacques Jean
(86) Numéro de dépôt international: PCT/EP2016/075725
(87) Numéro de publication internationale: WO 2017/072139

(56) Documents cités:
- EP-A1- 2 311 655
- WO-A1-2015/014575
- FR-A1- 3 032 149
- JP-A- S61 160 303

## Description

### DOMAINE DE L'INVENTION

La présente invention concerne un pneumatique de véhicule de tourisme et plus particulièrement le sommet d'un tel pneumatique.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien.

Dans ce qui suit, les expressions « radialement intérieur à» et « radialement extérieur à» signifient respectivement « plus proche de l'axe de rotation du pneumatique, selon la direction radiale, que » et « plus éloigné de l'axe de rotation du pneumatique, selon la direction radiale, que ». Les expressions « axialement intérieur à» et « axialement extérieur à» signifient respectivement « plus proche du plan équatorial, selon la direction axiale, que » et « plus éloigné du plan équatorial, selon la direction axiale, que ». Une « distance radiale » est une distance par rapport à l'axe de rotation du pneumatique, et une « distance axiale » est une distance par rapport au plan équatorial du pneumatique. Une « épaisseur radiale » est mesurée selon la direction radiale, et une « largeur axiale » est mesurée selon la direction axiale.

Un pneumatique comprend un sommet comprenant une bande roulement destinée à venir en contact avec le sol par l'intermédiaire d'une surface de roulement, deux bourrelets destinés à venir en contact avec une jante et deux flancs reliant le sommet aux bourrelets. En outre, un pneumatique comprend une armature de carcasse comprenant au moins une couche de carcasse, radialement intérieure au sommet et reliant les deux bourrelets.

La bande de roulement d'un pneumatique est délimitée, selon la direction radiale, par deux surfaces circonférentielles dont la plus radialement extérieure est appelée surface de roulement et dont la plus radialement intérieure est appelée surface de fond de sculpture. De plus, la bande de roulement d'un pneumatique est délimitée, selon la direction axiale, par deux surfaces latérales. La bande de roulement est en outre constituée par un ou plusieurs mélanges caoutchouteux. L'expression « mélange caoutchouteux » désigne une composition de caoutchouc comportant au moins un élastomère et une charge.

Le sommet comprend au moins une armature de sommet radialement intérieure à la bande de roulement. L'armature de sommet comprend au moins une armature de travail comprenant au moins une couche de travail composée d'éléments de renforcement parallèles entre eux formant, avec la direction circonférentielle, un angle compris entre 15° et 50°. L'armature de sommet peut également comprendre une armature de frettage comprenant au moins une couche de frettage composée d'éléments de renforcement formant, avec la direction circonférentielle, un angle compris entre 0° et 10°, l'armature de frettage étant le plus souvent mais pas obligatoirement radialement extérieure aux couches de travail.

Par « bande de roulement » d'un pneumatique, on entend une quantité d'un ou plusieurs matériaux caoutchouteux délimitée par des surfaces latérales et par deux surfaces principales dont l'une est destinée à entrer en contact avec une chaussée lorsque le pneumatique roule. Cette surface est nommée surface de roulement. L'autre surface, radialement intérieure à la première est nommée surface de fond de sculpture.

Afin d'obtenir des performances en adhérence sur sol mouillé, des découpures sont disposées dans la bande de roulement. Une découpure désigne soit un puits, soit une rainure, soit une incision, soit un sillon circonférentiel et forme un espace débouchant sur la surface de roulement. Un puits n'a, sur la surface de roulement, aucune dimension principale caractéristique. Une incision ou une rainure présente, sur la surface de roulement, deux dimensions principales caractéristiques : une largeur W et une longueur Lo, telle que la longueur Lo est au moins égale à 2 fois la largeur W. Une incision ou une rainure est donc délimitée par au moins deux faces latérales principales déterminant sa longueur Lo et reliées par une face de fond, les deux faces latérales principales étant distantes l'une de l'autre d'une distance non nulle, dite largeur W de l'incision ou de la rainure.

Par définition, une incision ou une rainure qui est délimitée par :
- uniquement deux faces latérales principales, est dite débouchante,
- par trois faces latérales, dont deux principales déterminant la longueur de la découpure, est dite borgne,
- par quatre faces latérales, dont deux principales déterminant la longueur de la découpure, est dite aveugle.

La différence entre une incision et une rainure est la valeur prise par la distance moyenne séparant les deux faces latérales principales de la découpure, à savoir sa largeur W. Dans le cas d'une incision, cette distance est appropriée pour permettre la mise en contact faces latérales principales en vis-à-vis lors du passage de l'incision dans le contact avec la chaussée. Dans le cas d'une rainure, les faces latérales principales de cette rainure ne peuvent pas venir en contact l'une contre l'autre dans les conditions usuelles de roulage. Cette distance pour une incision est généralement pour les pneumatiques de véhicule de tourisme au plus égale à 1 millimètre (mm). Un sillon circonférentiel est une découpure de direction sensiblement circonférentielle sensiblement continue sur toute la circonférence du pneumatique.

Plus précisément, la largeur W est la distance moyenne, déterminée sur la longueur de la découpure et sur une portion radiale de la découpure comprise entre une première surface circonférentielle, radialement intérieure à la surface de roulement à une distance radiale de 1 mm, et une deuxième surface circonférentielle, radialement extérieure à la surface de fond à une distance radiale de 1 mm, afin d'éviter tout problème de mesure lié au raccordement des deux faces latérales principales avec la surface de roulement et la surface de fond.

La profondeur de la découpure est la distance radiale maximale entre la surface de roulement et le fond de la découpure. La valeur maximale des profondeurs des découpures est nommée profondeur de sculpture D. La surface de fond de sculpture, ou surface de fond, est définie comme la surface translatée de la surface de roulement radialement vers l'intérieur d'une distance radiale égale à la profondeur de sculpture.

### ETAT DE LA TECHNIQUE

Dans le contexte actuel de développement durable, l'économie de ressources et donc de matières premières est un des objectifs majeurs des industriels. Pour les pneumatiques de véhicule de tourisme, une des voies de recherche pour cet objectif, consiste à remplacer les câbles métalliques habituellement utilisés comme éléments de renforcement de différentes couches de l'armature de sommet par des fils unitaires ou monofilaments tels que décrits dans le document EP 0043563 dans lequel ce type d'éléments de renforcement est utilisé dans un double objectif de gain de masse et de résistance au roulement.

Cependant l'utilisation de ce type d'éléments de renforcement présente l'inconvénient d'entraîner le flambement en compression de ces monofilaments amenant une endurance insuffisante du pneumatique comme le décrit le document EP2537686**.** Ainsi que le décrit ce même document, l'homme de l'art propose une disposition particulière des différentes couches de l'armature de sommet et une qualité spécifique des matériaux composant les éléments de renforcement de l'armature de sommet pour résoudre ce problème.

Une analyse du phénomène physique montre que le flambage des monofilaments a lieu dans les parties les plus axialement extérieures de la bande de roulement sous les rainures comme le mentionne le document JP 2012071791**.** Cette zone du pneumatique a comme particularité d'être soumise à des efforts de compression élevés dans les trajectoires courbes du véhicule. La résistance au flambement des monofilaments dépend de la géométrie des rainures, montrant ainsi l'influence étonnante de la sculpture sur l'endurance des monofilaments.
Le document WO2015/014575 montre un pneumatique avec une armature de sommet similaire à celle de l'invention mais reste silencieux par rapport au type d'incisions ou rainures de la bande de roulement.

### EXPOSE DE L'INVENTION

L'objectif principal de la présente invention est donc d'augmenter l'endurance d'un pneumatique dont les éléments de renforcement des couches de travail sont composés de monofilaments par la conception d'une sculpture adaptée de la bande de roulement.

Cet objectif est atteint par un pneumatique pour véhicule de tourisme, comprenant :
- une bande de roulement destinée à entrer en contact avec un sol par l'intermédiaire d'une surface de roulement et ayant une largeur axiale LT,
- la bande de roulement comprenant deux portions axialement extérieures ayant chacune une largeur axiale (LS1, LS2) au plus égale à 0.3 fois la largeur axiale LT et délimitées chacune axialement à l'intérieur par un sillon circonférentiel,
- au moins une portion axialement extérieure comprenant des rainures axialement extérieures, une rainure axialement extérieure formant un espace débouchant sur la surface de roulement et étant délimitée par au moins deux faces latérales dites principales reliées par une face de fond,

- au moins une rainure axialement extérieure, dite majeure, ayant une largeur moyenne W, définie par la distance moyenne entre les deux faces latérales, au moins égale à 1 mm, une profondeur D, définie par la distance radiale maximale entre la surface de roulement et la face de fond, au moins égale à 5 mm, et une longueur curviligne L,
- les rainures majeures axialement extérieures comprenant chacune, sur une portion de la longueur curviligne L, une zone radialement intérieure Z1 ayant une hauteur radiale h1 égale à D/3 et une largeur maximale W1 sensiblement constante, et une zone radialement extérieure Z2 ayant une hauteur radiale h2 égale à 2D/3 et une largeur W2,
- le pneumatique comprenant en outre une armature de sommet radialement intérieure à la bande de roulement,
- l'armature de sommet comprenant une armature de travail et une armature de frettage,
- l'armature de travail comprenant deux couches de travail, comprenant chacune des éléments de renforcement enrobés par un matériau élastomérique, parallèles entre eux et formant respectivement avec une direction circonférentielle (XX') du pneumatique, un angle orienté au moins égal à 20° et au plus égal à 50° en valeur absolue et de signe opposé d'une couche à la suivante,
- les dits éléments de renforcement de couche de travail étant constitués par des fils métalliques unitaires ou monofilaments ayant une section dont la plus petite dimension est au moins égale à 0.20 mm et au plus égale à 0.5 mm, une résistance à la rupture Rm,
- la densité d'éléments de renforcement de chaque couche de travail étant au moins égale à 100 fils par dm et au plus égale à 200 fils par dm,
- l'armature de frettage comprenant au moins une couche de frettage comprenant des éléments de renforcement, parallèles entre eux et formant, avec la direction circonférentielle (XX') du pneumatique, un angle B au plus égal à 10° en valeur absolue,
- les rainures majeures axialement extérieures de la bande de roulement comprenant, sur au moins 30% de leur longueur curviligne L, une zone radialement intérieure Z1 ayant une largeur maximale W1 au moins égale à 2 mm et une zone radialement extérieure Z2 ayant une largeur W2 au plus égale à 1 mm sur une hauteur radiale h3 au moins égale à D/3,
- la résistance à rupture R_{C} de chaque couche de travail est au moins égale à 30 000 N/dm, Rc étant définie par : Rc= Rm*S*d, où Rm est la résistance à la rupture en traction des monofilaments en MPa, S la section des monofilaments en mm² et d la densité de monofilaments de la couche de travail considérée, en nombre de monofilaments par dm.

L'intersection de la surface de roulement et des faces latérales principales d'une rainure détermine les profils principaux de la rainure. Les profils principaux des rainures sont habituellement intuitivement repérables car l'intersection entre la surface de roulement et les faces latérales des rainures est une courbe. Pour les pneumatiques dont la surface de roulement et les faces latérales des rainures se rejoignent continument, les profils des rainures sont déterminés par l'intersection des faces latérales principales des rainures et la translation radiale de la surface de roulement de -0.5mm. La longueur curviligne d'une rainure est calculée comme la moyenne des longueurs curvilignes des profils principaux.

Usuellement, les profils principaux de la rainure sont sensiblement de même forme et distants l'un de l'autre de la largeur W de la rainure.

On entend par largeur de la rainure la distance moyenne des faces latérales principales moyennée sur la longueur curviligne moyenne des profils principaux de la rainure.

Du point de vue du fonctionnement mécanique, le flambement d'un élément de renforcement se produit en compression. Il ne se produit que radialement à l'intérieur des portions les plus axialement extérieures de la bande de roulement car c'est dans cette zone que les efforts de compression sont les plus importants en cas d'effort transversal. Ces portions les plus axialement extérieures ont chacune pour largeur axiale maximale 0.3 fois la largeur totale de la bande de roulement du pneumatique.

Le flambement est un phénomène complexe et instable qui conduit à une rupture par fatigue d'un objet ayant au moins une dimension d'un ordre de grandeur inférieur à une dimension principale comme les poutres ou les coques. Les monofilaments sont des objets de ce type avec une section très inférieure à leur longueur. Le phénomène commence par une compression de la dimension principale. Il se poursuit en raison d'une dissymétrie de la géométrie du monofilament, ou de l'existence d'un effort transverse par une mise en flexion du monofilament, sollicitation très destructrice pour les matériaux métalliques. Ce phénomène complexe est notamment très dépendant des conditions aux limites, de la mobilité de l'élément et de la direction de l'effort appliqué et de la déformation résultante de cet effort. Si cette déformation ne s'effectue pas sensiblement suivant la direction de la dimension principale du monofilament alors le flambement n'aura pas lieu et, dans le cas des monofilaments entourés par une matrice de mélange caoutchouteux des couches de travail d'un pneumatique, l'effort est repris par le cisaillement du mélange caoutchouteux entre les monofilaments.

De plus le flambement des monofilaments des couches de travail ne se produit que sous les rainures axialement extérieures de la bande de roulement car en absence de rainure axialement extérieure, le matériau caoutchouteux de la bande de roulement radialement extérieur à l'élément de renforcement reprend la majeure partie de l'effort compression. De même les rainures axialement extérieures dont la profondeur est inférieure à 5 mm, n'ont pas d'influence sur le flambement des monofilaments.

Par ailleurs les rainures axialement extérieures dont la largeur est inférieure à 1 mm, appelées incisions, se ferment dans l'aire de contact et donc protègent les monofilaments du flambement. Pour les rainures non axialement extérieures, l'effort de compression en cas d'effort transversal sur le pneumatique est trop faible pour provoquer le flambement. Par ailleurs il est courant sur les pneumatiques pour véhicule de tourisme que seules des incisions d'une largeur inférieure à 1 mm soient disposées dans les parties axialement centrales de la bande de roulement.

Les deux portions axialement extérieures de la bande de roulement peuvent contenir un ou plusieurs sillons circonférentiels pour diminuer le risque d'hydroplanage sur sol mouillé. Pour des pneumatiques, ces sillons représentent une faible largeur de l'aire de contact et n'ont pas d'impact connu sur le flambement des monofilaments.

Donc seules les rainures axialement extérieures dites majeures, c'est-à-dire d'une profondeur supérieure à 5 mm et d'une largeur moyenne supérieure à 1mm doivent être soumises à des règles de conception particulières lors de l'utilisation de monofilaments dans les couches de travail. Ces rainures majeures axialement extérieures sont en particulier essentielles pour la performance en adhérence du pneumatique sur sol mouillé.

Dans les directions où aucun espace vide ne permet de déplacement, les efforts de compression vont être repris par le mélange caoutchouteux. Quand une rainure majeure axialement extérieure est présente, celle-ci n'absorbe pas les efforts mais au contraire autorise les déplacements en compression dans la direction perpendiculaire à la direction générale de ses faces latérales principales. Pour éviter le flambement, il est nécessaire que l'effort de compression ne s'applique pas sur l'élément de renforcement mais soit repris par un élément de la sculpture. Cependant il faut conserver un taux d'entaillement volumique à neuf et après usure compatible avec une bonne performance en adhérence sur sol mouillé. La forme des rainures proposées par les inventeurs est telle qu'à l'état neuf, la partie radialement extérieure de la rainure, dont la largeur est au plus égale à 1 mm, se ferme dans l'aire de contact et donc reprend les efforts de compression évitant ainsi aux éléments de renforcement des couches de travail de flamber. Lorsque le pneumatique s'use, la partie radialement extérieure disparaît laissant des rainures larges, d'une largeur moyenne au moins égale à 1 mm, toujours capables d'évacuer l'eau en cas de roulage sur sol mouillé mais avec une profondeur restante de la rainure telle que la sollicitation en compression n'est plus suffisante pour amener le flambement des monofilaments de l'armature de travail.

Les rainures majeures peuvent également contenir des protubérances ou pontages, ces pontages pouvant éventuellement contenir une incision de largeur moyenne inférieure à 1 mm.

Les monofilaments peuvent avoir toute forme de section, sachant que les sections oblongues représentent un avantage sur les sections circulaires de même plus petite dimension car leur inertie de flexion et donc leur résistance au flambement sont supérieures. Pour une section circulaire, la plus petite dimension correspond au diamètre de la section. Pour garantir une résistance à rupture en fatigue des monofilaments et la tenue au cisaillement des mélanges caoutchouteux situés entre les filaments, la densité d'éléments de renforcement de chaque couche de travail est au moins égale à 100 fils par dm et au plus égale à 200 fils par dm. Par densité on entend le nombre moyen de monofilaments sur une largeur de couche de travail de 10 cm, cette largeur étant prise perpendiculairement à la direction des monofilaments de la couche de travail considérée. La distance entre des éléments de renforcement consécutifs peut être fixe ou variable. La pose des éléments de renforcement en fabrication peut être effectuée par couche, par bandelette ou de façon unitaire.

Par ailleurs la résistance au flambement d'un monofilament dépend également de la résistance des filaments axialement adjacents, un début de flambement pouvant en entraîner un autre par l'effet d'une répartition de la charge autour du monofilament qui flambe. Pour obtenir une performance en endurance améliorée, il convient non seulement d'observer des conditions de diamètres et de la densité des monofilaments mais également remplir une condition portant sur la résistance de la couche de travail à savoir la résistance à rupture R_{C} de chaque couche de travail qui doit être au moins égale à 30 000 N/dm, Rc étant définie par : Rc= Rm*S*d, où Rm est la résistance à la rupture en traction des monofilaments en MPa, S la section des monofilaments en mm² et d la densité de monofilaments de la couche de travail considérée, en nombre de monofilaments par dm.

Pour un pneumatique pour lequel aucun sens de montage n'est imposé, la solution consiste à appliquer l'invention sur les deux portions les plus axialement extérieures de la bande de roulement.

Pour un pneumatique pour lequel un sens de montage est imposé, une possibilité est de n'appliquer l'invention que sur la portion la plus axialement extérieure de la bande de roulement, située côté extérieur véhicule.

Les sculptures des bandes de roulement de pneumatiques de véhicule de tourisme sont habituellement soit sensiblement symétriques, soit sensiblement antisymétriques, soit sensiblement asymétriques.

Il est avantageux que les rainures majeures axialement extérieures de la bande de roulement comprennent une zone radialement intérieure Z1 ayant une largeur W1 au plus égale à 8 mm afin de limiter le volume de creux de la bande de roulement et préserver le potentiel d'usure du pneumatique.

Pour des raisons de facilité de démoulage du pneumatique lors de sa fabrication, il est préféré que les rainures majeures axialement extérieures de la bande de roulement comprennent une zone radialement extérieure Z2 ayant une largeur W2 au moins égale à 0.4 mm.

Les rainures axialement extérieures ont souvent une profondeur inférieure à 8 mm. En effet au-delà d'une certaine épaisseur de gomme, la bande de roulement devient trop souple et le pneumatique devient moins performant en usure, comportement et résistance au roulement.

Il est particulièrement avantageux qu'au moins une rainure axialement extérieure débouche axialement à l'extérieur de la bande de roulement afin d'évacuer sur l'extérieur de l'aire de contact l'eau en cas de roulage sur route mouillée.

De même, pour améliorer la performance adhérence, il est avantageux qu'au moins une rainure axialement extérieure débouche axialement à l'intérieur d'un sillon circonférentiel de la bande de roulement.

Préférentiellement les rainures majeures axialement extérieures sont espacées, selon la direction circonférentielle (XX') du pneumatique, d'un pas circonférentiel P au moins égal à 8 mm, pour éviter une trop grande souplesse de la bande de roulement et des pertes de performance en usure et en résistance au roulement. Le pas circonférentiel est la distance circonférentielle moyenne sur la portion la plus axialement extérieure considérée de la bande de roulement entre les profils linéaires moyens de deux rainures majeures axialement extérieures circonférentiellement consécutives. Habituellement, les bandes de roulement des pneumatiques peuvent présenter des pas circonférentiels variables notamment pour limiter le bruit lors du roulage.

Une solution préférée consiste également à ce que les rainures majeures axialement extérieures soient espacées, selon la direction circonférentielle (XX') du pneumatique, d'un pas circonférentiel P au plus égal à 50 mm, afin de garantir, par un taux d'entaillement volumique de la bande de roulement suffisant, l'adhérence du pneumatique sur route mouillée.

Il est particulièrement avantageux que la distance radiale entre la face de fond des rainures axialement extérieures et les éléments de renforcement les plus radialement extérieurs de l'armature de sommet, soit au moins égale à 1.5 mm. En effet cette quantité minimale de matériaux caoutchouteux permet de protéger le sommet des agressions et des perforations par des obstacles, cailloux, débris quelconques se trouvant sur le sol.

Il est préféré que la distance radiale entre la face de fond des rainures axialement extérieures et les éléments de renforcement les plus radialement extérieurs de l'armature de sommet soit au plus égale à 3.5 mm pour obtenir un pneumatique performant en résistance au roulement.

Il est avantageux qu'au moins une portion axialement extérieure de la bande de roulement, comprenne des incisions ayant une largeur moyenne W au plus égale à 1 mm. Pour améliorer l'adhérence sur certains types de sols, notamment des sols verglacés ou enneigés, il est possible de disposer, dans les portions axialement extérieures de la bande de roulement, des incisions de faible largeur sans dégrader l'endurance du pneumatique dont l'armature de travail contient des monofilaments. En effet lors du passage dans l'aire de contact, les profils principaux de ces incisions viennent en contact entre eux et le matériau caoutchouteux de la bande de roulement reprend alors les efforts de compression.

Il est également possible de disposer des rainures de faible profondeur, inférieure à 5 mm, sans dégrader de manière significative l'endurance du pneumatique mais dans ce cas, la performance notamment adhérence sur sol mouillé, se dégrade avec l'usure du pneumatique.

Les deux portions axialement extérieures de la bande de roulement ont chacune une largeur axiale (LS1, LS2) au plus égale à 0.2 fois la largeur axiale LT de la bande de roulement.

Préférentiellement chaque couche de travail comprend des éléments de renforcement constitués par des fils métalliques unitaires ou monofilaments ayant une section dont la plus petite dimension est au moins égale à 0.3 mm et au plus égale à 0.37 mm qui constituent un optimum pour l'équilibre des performances visées : le gain de masse et l'endurance au flambement des éléments de renforcement des couches de travail.

Une solution préférée est que chaque couche de travail comprenne des éléments de renforcement formant, avec une direction circonférentielle (XX') du pneumatique, un angle dont la valeur absolue est au moins égal à 22° et au plus égal à 35° qui constituent un optimum entre les performances de comportements et d'endurance du pneumatique. Les angles des éléments de renforcement des couches de travail sont mesurés au niveau du plan équatorial.

Il est avantageux que la densité d'éléments de renforcement de chaque couche de travail soit au moins égale à 120 fils par dm et au plus égale à 180 fils par dm afin de garantir une endurance améliorée des mélanges caoutchouteux travaillant en cisaillement entre les éléments de renforcement et l'endurance de ces derniers en traction et compression.

Les éléments de renforcement des couches de travail peuvent être rectilignes ou non. Ils peuvent être préformés, de forme sinusoïdale, zigzag, ondulée ou suivant une spirale. Les éléments de renforcement des couches de travail sont en acier, de préférence en acier au carbone tel que ceux utilisés dans les câbles type "steel cords" ; mais il est bien entendu possible d'utiliser d'autres aciers, par exemple des aciers inoxydables, ou d'autres alliages.

Lorsqu'un acier au carbone est utilisé, sa teneur en carbone (% en poids d'acier) est de préférence comprise dans un domaine de 0,8% à 1,2%. L'invention s'applique en particulier à des aciers du type steel cord à très haute résistance (dit "SHT" pour " Super High Tensile "), ultra-haute résistance (dit "UHT" pour "Ultra High Tensile " ou "MT" pour "Mega Tensile "). Les renforts en acier au carbone ont alors une résistance à la rupture en traction (Rm) qui est de préférence supérieure à 3000 MPa, plus préférentiellement supérieure à 3500 MPa. Leur allongement total à la rupture (At), somme de l'allongement élastique et de l'allongement plastique, est de préférence supérieur à 2,0%.

Pour ce qui concerne les renforts en acier, les mesures, de résistance à la rupture notée Rm (en MPa) et d'allongement à la rupture noté At (allongement total en %) sont effectuées en traction selon la norme ISO 6892 de 1984.

L'acier utilisé, qu'il s'agisse en particulier d'un acier au carbone ou d'un acier inoxydable, peut être lui-même revêtu d'une couche métallique améliorant par exemple les propriétés de mise en oeuvre du monofilament d'acier, ou les propriétés d'usage du renfort et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc ; on rappelle que lors du procédé de fabrication des fils, le revêtement de laiton ou de zinc facilite le tréfilage du fil, ainsi que le collage du fil avec le caoutchouc. Mais les renforts pourraient être recouverts d'une fine couche métallique autre que du laiton ou du zinc, ayant par exemple pour fonction d'améliorer la résistance à la corrosion de ces fils et/ou leur adhésion au caoutchouc, par exemple une fine couche de Co, Ni, Al, d'un alliage de deux ou plus des composés Cu, Zn, Al, Ni, Co, Sn.

Préférentiellement les éléments de renforcement de la au moins une couche de frettage sont en textile de type polyamide aliphatique, polyamide aromatique, combinaison de polyamide aliphatique et de polyamide aromatique, polytéréphtalate d'éthylène ou rayonne car les matériaux textiles sont particulièrement adaptés à ce type d'usage étant légers et offrant une excellente rigidité. La distance entre des éléments de renforcement consécutifs de la couche de frettage peut être fixe ou variable. La pose des éléments de renforcement en fabrication peut être effectuée par couche, par bandelette ou par éléments de renforcement.

Il est avantageux que l'armature de frettage soit radialement extérieure à l'armature de travail pour une bonne tenue de cette dernière en endurance.

### BREVE DESCRIPTION DES DESSINS

Les caractéristiques et autres avantages de l'invention seront mieux compris à l'aide des figures 1 à 7, les dites figures n'étant pas représentées à l'échelle mais de façon simplifiée, afin de faciliter la compréhension de l'invention :
- La figure 1 est une vue en perspective représentant une partie de pneumatique selon l'invention, en particulier son architecture et sa bande de roulement.
- La figure 2 représente une coupe méridienne du sommet d'un pneumatique selon l'invention et illustre les parties axialement extérieures de la bande de roulement.
- Les figures 3A et 3B présentent deux types de profil méridien radialement extérieur de la bande de roulement d'un pneumatique tourisme.
- La figure 4 illustre divers modes de réalisation de rainures axialement extérieures selon l'invention.
- La figure 5A, 5B, 5C illustrent une méthode de détermination des rainures majeures dans le cas d'un réseau de rainures.
- La figure 6 illustre deux types de lamelle pour deux exemples des pneumatiques A et B décrits ci-après.
- La figure 7 illustre les bords respectifs extérieur et intérieur d'une bande de roulement.

### DESCRIPTION DETAILLEE DES DESSINS

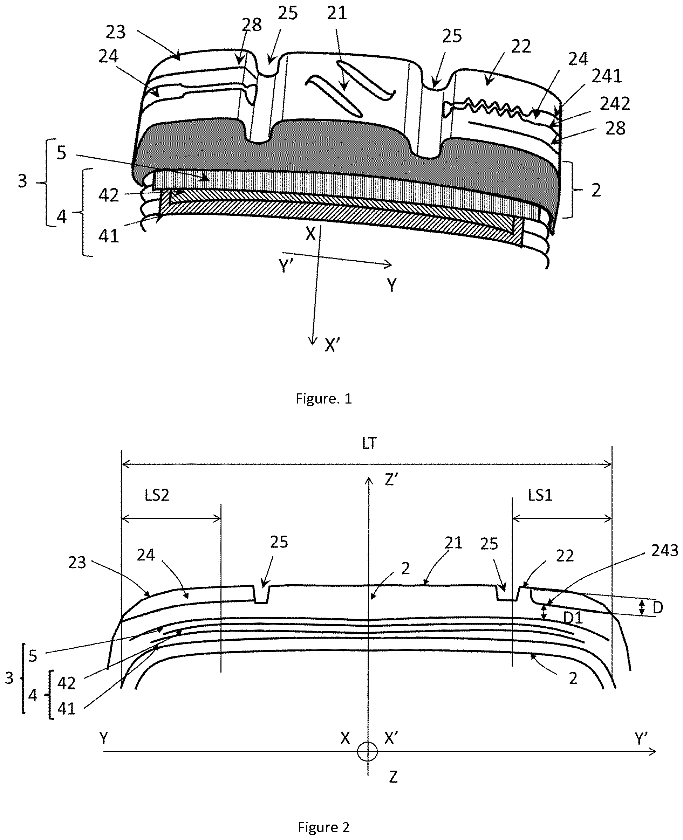

La figure 1 représente une vue en perspective représentant une partie du sommet d'un pneumatique. Le pneumatique comporte une bande de roulement 2 destinée à entrer en contact avec un sol par l'intermédiaire d'une surface de roulement 21. Dans les parties axialement extérieures 22 et 23 de la bande de roulement, sont disposées des rainures axialement extérieures 24. Le pneumatique comprend en outre une armature de sommet 3 comprenant une armature de travail 4 et une armature de frettage 5. L'armature de travail comprend deux couches de travail 41 et 42 comprenant chacune des éléments de renforcement parallèles entre eux, formant respectivement avec une direction circonférentielle (XX') du pneumatique, un angle orienté au moins égal à 20° et au plus égal à 50° en valeur absolue et de signe opposé d'une couche à la suivante.

La figure 1 représente dans les parties axialement extérieures 22 et 23 de la bande de roulement, uniquement des rainures axialement extérieures axiales, suivant l'axe axial (YY'). En réalité cette représentation est de pure convenance pour la lisibilité de la figure 1, les rainures axialement extérieures dans les bandes de roulement des véhicules de tourisme pouvant, en fonction des performances visées, notamment en adhérence sur sol mouillé, faire un angle avec la direction axiale (YY') compris entre plus ou moins 60°.

La figure 2 représente schématiquement une coupe méridienne du sommet du pneumatique selon l'invention. Elle illustre en particulier les largeurs LS1 et LS2 des parties axialement extérieures 23 et 24 de la bande de roulement, ainsi que la largeur totale du pneumatique LT. Sont représentées également la profondeur D d'une rainure axialement extérieure 24 et la distance D1 entre la face de fond 243 de toute rainure 24 et l'armature de sommet 3 mesurée sur une coupe méridienne du pneumatique. Une coupe méridienne du pneumatique est obtenue par découpage du pneumatique selon deux plans méridiens. A titre d'exemple, une coupe méridienne de pneumatique a une épaisseur selon la direction circonférentielle d'environ 60 mm au niveau de la bande de roulement. La mesure se fait en maintenant la distance entre les deux bourrelets identique à celle du pneumatique monté sur sa jante et faiblement gonflé.

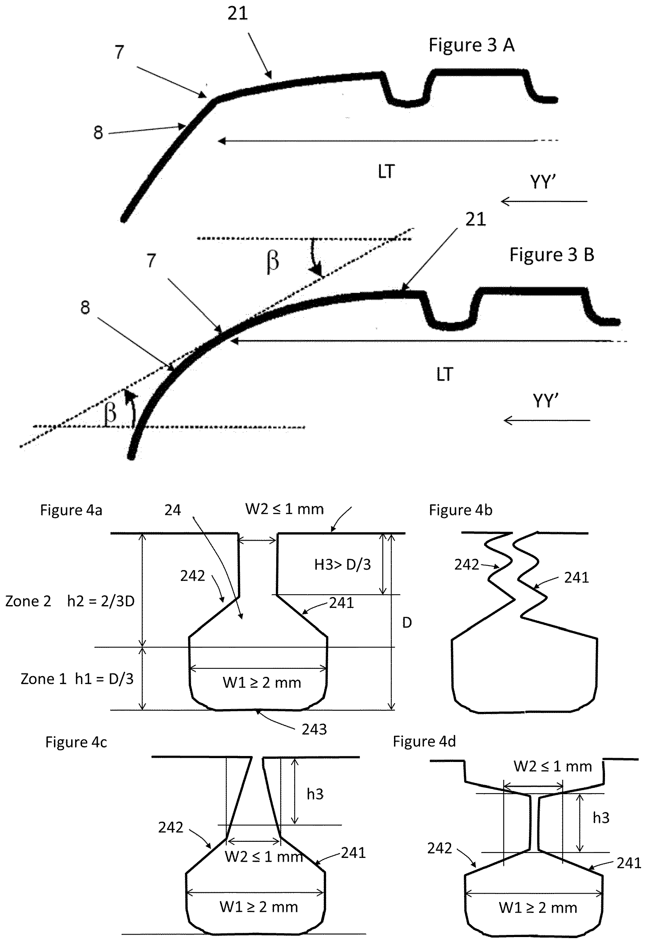

Sur les figure 3A et 3B, est représentée la méthode de détermination des bords axiaux 7 de la bande de roulement qui permettent de mesurer la largeur bande de roulement. Dans la figure 3A où la surface de roulement 21 est sécante avec la surface axiale extérieure du pneumatique 8, le bord axial 7 est trivialement déterminé par l'homme de l'art comme point d'intersection des deux surfaces. Dans la figure 3B où la surface de roulement 21 prolonge de façon continue et dérivable, au sens mathématique, la surface axiale extérieure du pneumatique 8, on trace, sur une coupe radiale du pneumatique, la tangente à la surface de roulement en tout point de ladite surface de roulement dans la zone de transition vers le flanc. Le premier bord axial 7 est le point pour lequel l'angle β entre ladite tangente et une direction axiale est égal à 30°. Lorsqu'il existe plusieurs points pour lesquels l'angle β entre ladite tangente et une direction axiale est égal à 30°, on retient le point radialement le plus à l'extérieur. On procédera de la même manière pour déterminer le second bord axial de la bande de roulement, symétrique par rapport au plan équatorial du pneumatique.

La figure 4 représente schématiquement des coupes transversales, sensiblement perpendiculaires aux faces latérales principales (241, 242), des rainures axialement extérieures 24 dans une bande de roulement 2 selon quatre modes de réalisation différents. Les rainures axialement extérieures 24 comprennent une zone radialement intérieure Z1 ayant une hauteur radiale h1 égale à D/3 et une largeur maximale W1, et une zone radialement extérieure Z2 ayant une hauteur radiale h2 égale à 2D/3 et une largeur W2. La figure 4a illustre un premier mode de réalisation d'une rainure pour lequel la largeur W2 de la zone 2 est au plus égale à 1 mm sur une hauteur au moins égale à 0.33D et la largeur W1 de la zone 1 est au moins égale à 2 mm. La figure 4b illustre un deuxième mode de réalisation d'une rainure pour lequel les faces latérales principales ont des formes spécifiques destinées à bloquer leurs déplacements relatifs quand celles-ci viennent en contact dans l'aire de contact. Ces technologies de lamelles dites autobloquantes, qu'elles soient autobloquantes dans la direction radiale comme illustré dans la figure 4b, dans la direction générale de la rainure comme illustré dans la figure 1 par la lamelle 24 sur la partie axialement extérieure 22, ou dans ces deux directions, sont bien connues de l'homme de l'art. L'intérêt de telles solutions est de bloquer les déplacements relatifs des faces latérales principales et d'éviter des formes d'usure spécifiques dommageables à la performance du pneumatique. Les figures 4c et 4d illustrent deux autres modes de réalisation possibles de rainures axialement extérieures 24.

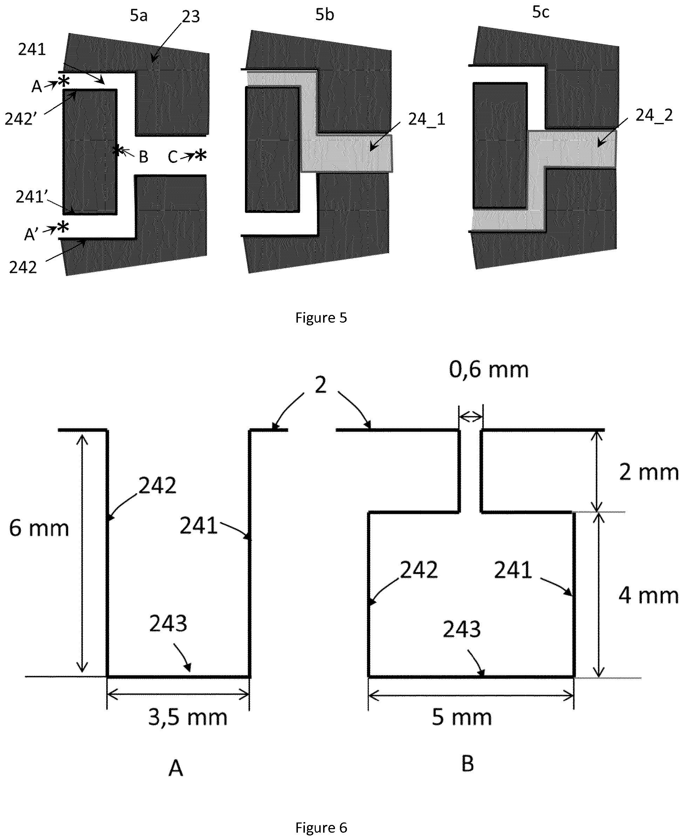

Les figures 5A, 5B, 5C illustrent une méthode de détermination des rainures majeures dans le cas d'un réseau de rainures. Pour certaines sculptures, des rainures sont débouchantes dans d'autres rainures comme l'illustre la figure 5A. Dans ce cas on déterminera les faces latérales du réseau qui sont les faces latérales continues les plus circonférentiellement éloignées l'une de l'autre du réseau de rainures, dans le cas présent les faces latérales 241 et 242. On appliquera l'invention à toutes les rainures ayant pour faces latérales une des faces latérales du réseau et la face latérale opposée directement adjacente. On considérera donc ici la rainure 24_1 (Figure 5B), de profil moyen linéaire L_1, constituée par la face latérale du réseau 241 et la face latérale opposée directement adjacente à (241, 242'), sur une première portion à partir du point A jusqu'au point B, et par la face latérale du réseau 241 et la face latérale 242 opposée directement adjacente à 241, sur une deuxième portion à partir du point B jusqu'au point C. Puis on considérera la rainure 24_2 (Figure 5C), de profil moyen linéaire L_2, constituée par la face latérale du réseau 242 et la face latérale 241'opposée directement adjacente à 242, sur une première portion à partir du point A jusqu'au point B, et par la face latérale du réseau 242 et la face latérale 241 opposée directement adjacente à 242, sur une deuxième portion à partir du point B jusqu'au point C. Pour des réseaux plus complexes, on généralisera cette règle de manière à ce que l'ensemble des rainures majeures possibles du réseau sensiblement dans l'orientation des faces latérales du réseau vérifient les caractéristiques de l'invention.

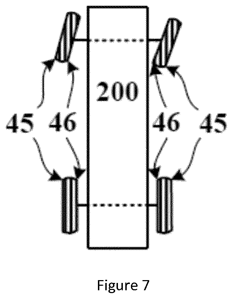

La figure 7 représente schématiquement des pneumatiques destinés à être montés sur des jantes de montage de roues d'un véhicule 200 et ayant un sens de montage prédéterminé sur le véhicule. Chaque pneumatique comporte un bord axial extérieur 45 et un bord axial intérieur 46, le bord axial intérieur 46 étant le bord destiné à être monté du côté de la caisse du véhicule lorsque le pneumatique est monté sur le véhicule selon ledit sens de montage prédéterminé et inversement pour le bord axial extérieur 45. Dans le document « côté extérieur du véhicule » désigne le bord axial extérieur 45.

Les inventeurs ont réalisé des calculs sur la base de l'invention pour un pneumatique de dimension 205/55 R16, gonflé à une pression de 2 bars, comprenant deux couches de travail de monofilaments en acier, de diamètre 0.3 mm et répartis selon une densité de 158 fils au dm et formant avec la direction circonférentielle des angles respectivement égaux à 27 et -27°. Les monofilaments ont une résistance à la rupture Rₘ égale à 3500 MPa et les couches de travail ont chacune une résistance à rupture R_{c} égale à 39 000 N/dm. Le pneumatique comporte des rainures axialement extérieures de type borgne d'une profondeur de 6.5 mm, sur les deux portions axialement extérieures de la bande de roulement du pneumatique ayant une largeur 0.2 fois la largeur de la bande de roulement, répartis selon un pas circonférentiel de 27 mm. La distance radiale D1 entre la face de fond des rainures majeures axialement extérieures et l'armature de sommet est au moins égale à 2 mm.

Le pneumatique A comporte des rainures de section rectangulaire, ayant une profondeur égale à 6 mm, une largeur 3,5 mm et une section égale à 21 mm2, illustrées par la figure 6A. Le pneumatique B comporte des rainures ayant une profondeur égale à 6 mm, rectangulaire par morceau. La zone 1 la plus radialement intérieure des rainures du pneumatique B a une largeur maximale W1 égale à 5 mm et une profondeur égale à 4 mm. La zone 2 la plus radialement extérieure des rainures du pneumatique B, a une largeur égale à 0.6 mm et une hauteur égale à 2 mm. Ces rainures sont illustrées par la figure 6B. Elles vérifient les caractéristiques de l'invention. La section de ces deux types de rainures est égale à 21 mm2. Les pneumatiques sont calculés avec une distance entre chaque rainure adjacente. La distance circonférentielle entre deux rainures consécutives est égale à 27 mm. La direction générale des rainures est sensiblement axiale.

Les conditions de calcul reproduisent les conditions de roulage d'un pneumatique avant côté extérieur du virage, c'est-à-dire de celui qui est le plus sollicité sur un véhicule de tourisme. Ces sollicitations, pour une accélération latérale de 0.7g, sont les suivantes : une charge (Fz) de 749 daN, un effort latéral (Fy) de 509 daN et un carrossage de 3.12°. La forme des rainures du pneumatique B permet de réduire de 37% les contraintes de flexion dans les monofilaments de l'armature de travail par rapport au pneumatique A comportant les rainures de type A, ces contraintes de flexion étant à l'origine de leur rupture par fatigue. La forme des rainures majeures du pneumatique B permet donc de garantir une endurance des monofilaments supérieure à la forme des rainures majeures du pneumatique A, tout en conservant le même taux d'entaillement volumique.

## Revendications

1. Pneumatique (1) pour véhicule de tourisme, comprenant :
• une bande de roulement (2) destinée à entrer en contact avec un sol par l'intermédiaire d'une surface de roulement (21) et ayant une largeur axiale LT,
• la bande de roulement (2) comprenant deux portions axialement extérieures (22, 23) ayant chacune une largeur axiale (LS1, LS2) au plus égale à 0.3 fois la largeur axiale LT et délimitées chacune axialement à l'intérieur par un sillon circonférentiel (25),
• au moins une portion axialement extérieure (22, 23) comprenant des rainures axialement extérieures (24), une rainure axialement extérieure (24) formant un espace débouchant sur la surface de roulement (21), et étant délimitée par au moins deux faces latérales dites principales (241, 242) reliées par une face de fond (243), et faisant un angle avec la direction axiale (YY') compris entre plus ou moins 60°,
• au moins une rainure axialement extérieure (24), dite majeure, ayant une largeur moyenne W, définie par la distance moyenne entre les deux faces latérales (241, 242), au moins égale à 1 mm, une profondeur D, définie par la distance radiale maximale entre la surface de roulement (21) et la face de fond (243), au moins égale à 5 mm, et une longueur curviligne L,
• les rainures majeures axialement extérieures (24) comprenant chacune, sur une portion de la longueur curviligne L, une zone radialement intérieure Z1 ayant une hauteur radiale h1 égale à D/3 et une largeur maximale W1 sensiblement constante, et une zone radialement extérieure Z2 ayant une hauteur radiale h2 égale à 2D/3 et une largeur W2,
• le pneumatique comprenant en outre une armature de sommet (3) radialement intérieure à la bande de roulement (2),
• l'armature de sommet (3) comprenant une armature de travail (4) et une armature de frettage (5),
• l'armature de travail (4) comprenant deux couches de travail (41, 42), comprenant chacune des éléments de renforcement enrobés par un matériau élastomérique, parallèles entre eux et formant respectivement avec une direction circonférentielle (XX') du pneumatique, un angle orienté au moins égal à 20° et au plus égal à 50° en valeur absolue et de signe opposé d'une couche à la suivante,
• les dits éléments de renforcement de couche de travail étant constitués par des fils métalliques unitaires ou monofilaments ayant une section dont la plus petite dimension est au moins égale à 0.20 mm et au plus égale à 0.5 mm, une résistance à la rupture Rm,
• la densité d'éléments de renforcement de chaque couche de travail étant au moins égale à 100 fils par dm et au plus égale à 200 fils par dm,
• l'armature de frettage (5) comprenant au moins une couche de frettage comprenant des éléments de renforcement, parallèles entre eux et formant, avec la direction circonférentielle (XX') du pneumatique, un angle B au plus égal à 10° en valeur absolue,
**caractérisé en ce que** les rainures majeures axialement extérieures (24) de la bande de roulement (2) de profondeur D, comprennent, sur au moins 30% de leur longueur curviligne L, une zone radialement intérieure Z1 ayant une largeur maximale W1 au moins égale à 2 mm et une zone radialement extérieure Z2 ayant une largeur W2 au plus égale à 1 mm sur une hauteur radiale h3 au moins égale à D/3,
**et en ce que** la résistance à rupture R_{C} de chaque couche de travail (41, 42) est au moins égale à 30 000 N/dm, Rc étant définie par : Rc= Rm*S*d, où Rm est la résistance à la rupture en traction des monofilaments en MPa, S la section des monofilaments en mm² et d la densité de monofilaments de la couche de travail considérée, en nombre de monofilaments par dm.

2. Pneumatique selon la revendication 1 **dans lequel** les rainures majeures axialement extérieures (24) de la bande de roulement (2) comprennent une zone radialement intérieure Z1 ayant une largeur W1 au plus égale à 8 mm.

3. Pneumatique selon l'une des revendications 1 ou 2 **dans lequel** les rainures majeures axialement extérieures (24) de la bande de roulement (2) comprennent une zone radialement extérieure Z2 ayant une largeur W2 au moins égale à 0.4 mm.

4. Pneumatique selon l'une des revendications 1 à 3, **dans lequel** au moins une rainure axialement extérieure (24) débouche axialement à l'extérieur de la bande de roulement (2).

5. Pneumatique selon l'une des revendications 1 à 4 **dans lequel** au moins une rainure axialement extérieure (24) débouche axialement à l'intérieur d'un sillon circonférentiel (25) de la bande de roulement (2).

6. Pneumatique selon l'une quelconque des revendications 1 à 5 **dans lequel** les rainures majeures axialement extérieures (24) sont espacées, selon la direction circonférentielle (XX') du pneumatique, d'un pas circonférentiel P au moins égal à 8 mm.

7. Pneumatique selon l'une quelconque des revendications 1 à 6 **dans lequel** les rainures majeures axialement extérieures (24) sont espacées, selon la direction circonférentielle (XX') du pneumatique, d'un pas circonférentiel P au plus égal à 50 mm.

8. Pneumatique selon l'une quelconque des revendications 1 à 7 **dans lequel** la distance radiale D1 entre la face de fond (243) des rainures axialement extérieures (24) et les éléments de renforcement les plus radialement extérieurs de l'armature de sommet (3) est au moins égale à 1.5 mm.

9. Pneumatique selon l'une quelconque des revendications 1 à 8 **dans lequel** la distance radiale D1 entre la face de fond (243) des rainures axialement extérieures (24) et les éléments de renforcement les plus radialement extérieurs de l'armature de sommet (3) est au plus égale à 3.5 mm.

10. Pneumatique selon l'une quelconque des revendications 1 à 9 **dans lequel** au moins une portion axialement extérieure (23, 24) de la bande de roulement (2) comprend des incisions (28) ayant une largeur moyenne w au plus égale à 1 mm.

11. Pneumatique selon l' une quelconque des revendications 1 à 10 **dans lequel** les deux portions axialement extérieures (22, 23) de la bande de roulement (2) ont chacune une largeur axiale (LS1, LS2) au plus égale à 0.2 fois la largeur axiale LT.

12. Pneumatique selon l'une quelconque des revendications 1 à 11 **dans lequel** chaque couche de travail (41, 42) comprend des éléments de renforcement, constitués par des fils métalliques unitaires ou monofilaments ayant un diamètre au moins égal à 0.3 mm et au plus égal à 0.37 mm.

13. Pneumatique selon l'une quelconque des revendications 1 à 12 **dans lequel** chaque couche de travail (41, 42) comprend des éléments de renforcement, formant, avec une direction circonférentielle (XX') du pneumatique, un angle dont la valeur absolue est au moins égale à 22° et au plus égal à 35°.

14. Pneumatique selon l'une quelconque des revendications 1 à 13 **dans lequel** la densité d'éléments de renforcement de chaque couche de travail (41, 42) est au moins égale à 120 fils par dm et au plus égale à 180 fils par dm.

15. Pneumatique selon l'une quelconque des revendications 1 à 14 **dans lequel** les éléments de renforcement des couches de travail (41, 42) sont en acier, de préférence en acier au carbone.

16. Pneumatique selon l'une quelconque des revendications 1 à 15 **dans lequel** les éléments de renforcement de la au moins une couche de frettage sont en textile, de préférence de type polyamide aliphatique, polyamide aromatique, combinaison de polyamide aliphatique et de polyamide aromatique, polytéréphtalate d'éthylène ou rayonne.

17. Pneumatique selon l'une quelconque des revendications 1 à 16 **dans lequel** l'armature de frettage (5) est radialement extérieure à l'armature de travail (4).

## Patentansprüche

1. Luftreifen (1) für ein Personenfahrzeug, der enthält:
• einen Laufstreifen (2), der dazu bestimmt ist, mittels einer Lauffläche (21) mit einem Boden in Kontakt zu kommen, und der eine axiale Breite LT hat,
• wobei der Laufstreifen (2) zwei axial äußere Abschnitte (22, 23) enthält, die je eine axiale Breite (LS1, LS2) höchstens gleich dem 0,3-Fachen der axialen Breite LT haben und je axial innen von einer Umfangskerbe (25) begrenzt werden,
• wobei mindestens ein axial äußerer Abschnitt (22, 23) axial äußere Rillen (24) enthält, wobei eine axial äußere Rille (24) einen an der Lauffläche (21) mündenden Raum bildet und von mindestens zwei so genannten Hauptseitenflächen (241, 242) begrenzt wird, die durch eine Bodenseite (243) verbunden sind und mit der axialen Richtung (YY') einen Winkel zwischen mehr oder weniger 60° bilden,
• wobei mindestens eine axial äußere so genannte Hauptrille (24) eine mittlere Breite W, definiert durch den mittleren Abstand zwischen den zwei Seitenflächen (241, 242), mindestens gleich 1 mm, eine Tiefe D, definiert durch den maximalen radialen Abstand zwischen der Lauffläche (21) und der Bodenseite (243), mindestens gleich 5 mm, und eine gekrümmte Länge L hat,
• wobei die axial äußeren Hauptrillen (24) je in einem Abschnitt der gekrümmten Länge L einen radial inneren Bereich Z1, der eine radiale Höhe h1 gleich D/3 und eine im Wesentlichen konstante maximale Breite W1 hat, und einen radial äußeren Bereich Z2 enthalten, der eine radiale Höhe h2 gleich 2D/3 und eine Breite W2 hat,
• wobei der Luftreifen außerdem eine Scheitelbewehrung (3) enthält, die bezüglich des Laufstreifens (2) radial innen liegt,
• wobei die Scheitelbewehrung (3) eine Arbeitsbewehrung (4) und eine Bandagierungsbewehrung (5) enthält,
• wobei die Arbeitsbewehrung (4) zwei Arbeitsschichten (41, 42) enthält, die je mit einem Elastomermaterial umhüllte Verstärkungselemente enthalten, parallel zueinander sind und je mit einer Umfangsrichtung (XX') des Luftreifens einen ausgerichteten Winkel mindestens gleich 20° und höchstens gleich 50° im Absolutwert und von einer Schicht zur anderen mit entgegengesetztem Vorzeichen bilden,
• wobei die Arbeitsschicht-Verstärkungselemente aus Einzeldrähten oder Monofilamenten bestehen, die einen Querschnitt, dessen kleinste Abmessung mindestens gleich 0,20 mm und höchstens gleich 0,5 mm ist, und eine Bruchfestigkeit Rm haben,
• wobei die Dichte von Verstärkungselementen jeder Arbeitsschicht mindestens gleich 100 Drähte pro dm und höchstens gleich 200 Drähte pro dm ist,
• wobei die Bandagierungsbewehrung (5) mindestens eine Bandagierungsschicht enthält, die Verstärkungselemente enthält, die parallel zueinander liegen und mit der Umfangsrichtung (XX') des Luftreifens einen Winkel B höchstens gleich 10° im Absolutwert bilden,
**dadurch gekennzeichnet, dass** die axial äußeren Hauptrillen (24) des Laufstreifens (2) einer Tiefe D über mindestens 30% ihrer gekrümmten Länge L einen radial inneren Bereich Z1, der eine maximale Breite W1 mindestens gleich 2 mm hat, und einen radial äußeren Bereich Z2 enthalten, der eine Breite W2 höchstens gleich 1 mm über eine radiale Höhe h3 mindestens gleich D/3 hat,
und dass die Bruchfestigkeit R_{c} jeder Arbeitsschicht (41, 42) mindestens gleich 30 000 N/dm ist, wobei R_{c} definiert wird durch: R_{c}=Rm*S*d, wobei Rm die Zug-Bruchfestigkeit der Monofilamente in MPa, S der Querschnitt der Monofilamente in mm² und d die Dichte von Monofilamenten der betrachteten Arbeitsschicht in Anzahl von Monofilamenten pro dm ist.

2. Luftreifen nach Anspruch 1, wobei die axial äußeren Hauptrillen (24) des Laufstreifens (2) einen radial inneren Bereich Z1 enthalten, der eine Breite W1 höchstens gleich 8 mm hat.

3. Luftreifen nach einem der Ansprüche 1 oder 2, wobei die axial äußeren Hauptrillen (24) des Laufstreifens (2) einen radial äußeren Bereich Z2 enthalten, der eine Breite W2 mindestens gleich 0,4 mm hat.

4. Luftreifen nach einem der Ansprüche 1 bis 3, wobei mindestens eine axial äußere Rille (24) axial außerhalb des Laufstreifens (2) mündet.

5. Luftreifen nach einem der Ansprüche 1 bis 4, wobei mindestens eine axial äußere Rille (24) axial innerhalb einer Umfangskerbe (25) des Laufstreifens (2) mündet.

6. Luftreifen nach einem der Ansprüche 1 bis 5, wobei die axial äußeren Hauptrillen (24) um eine Umfangsteilung P mindestens gleich 8 mm gemäß der Umfangsrichtung (XX') des Luftreifens beabstandet sind.

7. Luftreifen nach einem der Ansprüche 1 bis 6, wobei die axial äußeren Hauptrillen (24) um eine Umfangsteilung P höchstens gleich 50 mm gemäß der Umfangsrichtung (XX') des Luftreifens beabstandet sind.

8. Luftreifen nach einem der Ansprüche 1 bis 7, wobei der radiale Abstand D1 zwischen der Bodenseite (243) der axial äußeren Rillen (24) und den radial am weitesten außen liegenden Verstärkungselementen der Scheitelbewehrung (3) mindestens gleich 1,5 mm ist.

9. Luftreifen nach einem der Ansprüche 1 bis 8, wobei der radiale Abstand D1 zwischen der Bodenseite (243) der axial äußeren Rillen (24) und den radial am weitesten außen liegenden Verstärkungselementen der Scheitelbewehrung (3) höchstens gleich 3,5 mm ist.

10. Luftreifen nach einem der Ansprüche 1 bis 9, wobei mindestens ein axial äußerer Abschnitt (23, 24) des Laufstreifens (2) Einschnitte (28) enthält, die eine mittlere Breite w höchstens gleich 1 mm haben.

11. Luftreifen nach einem der Ansprüche 1 bis 10, wobei die zwei axial äußeren Abschnitte (22, 23) des Laufstreifens (2) je eine axiale Breite (LS1, LS2) höchstens gleich dem 0,2-Fachen der axialen Breite LT haben.

12. Luftreifen nach einem der Ansprüche 1 bis 11, wobei jede Arbeitsschicht (41, 42) Verstärkungselemente enthält, die aus Einzeldrähten oder Monofilamenten bestehen, die einen Durchmesser mindestens gleich 0,3 mm und höchstens gleich 0,37 mm haben.

13. Luftreifen nach einem der Ansprüche 1 bis 12, wobei jede Arbeitsschicht (41, 42) Verstärkungselemente enthält, die mit einer Umfangsrichtung (XX') des Luftreifens einen Winkel bilden, dessen Absolutwert mindestens gleich 22° und höchstens gleich 35° ist.

14. Luftreifen nach einem der Ansprüche 1 bis 13, wobei die Dichte von Verstärkungselementen jeder Arbeitsschicht (41, 42) mindestens gleich 120 Drähte pro dm und höchstens gleich 180 Drähte pro dm ist.

15. Luftreifen nach einem der Ansprüche 1 bis 14, wobei die Verstärkungselemente der Arbeitsschichten (41, 42) aus Stahl, vorzugsweise aus Kohlenstoffstahl sind.

16. Luftreifen nach einem der Ansprüche 1 bis 15, wobei die Verstärkungselemente der mindestens einen Bandagierungsschicht aus einem Textil sind, vorzugsweise von der Art aliphatisches Polyamid, aromatisches Polyamid, Kombination von aliphatischem Polyamid und aromatischem Polyamid, Polyethylenterephthalat oder Rayon.

17. Luftreifen nach einem der Ansprüche 1 bis 16, wobei die Bandagierungsbewehrung (5) bezüglich der Arbeitsbewehrung (4) radial außen liegt.

## Claims

1. Tyre (1) for a passenger vehicle, comprising:
• a tread (2) intended to come into contact with the ground via a tread surface (21) and having an axial width LT,
• the tread (2) comprising two axially exterior portions (22, 23) each having an axial width (LS1, LS2) at most equal to 0.3 times the axial width LT and each delimited axially on the inside by a circumferential groove (25),
• at least one axially exterior portion (22, 23) comprising axially exterior grooves (24), an axially exterior groove (24) forming a space opening onto the tread surface (21) and being delimited by at least two faces referred to as main lateral faces (241, 242) connected by a bottom face (243) and making with the axial direction (YY') an angle of between plus or minus 60°,
• at least one axially exterior groove (24), referred to as major groove, having a mean width W, defined by the mean distance between the two lateral faces (241, 242), at least equal to 1 mm, a depth D, defined by the maximum radial distance between the tread surface (21) and the bottom face (243), at least equal to 5 mm, and a curvilinear length L,
• the axially exterior major grooves (24) each comprising, over a portion of the curvilinear length L, a radially interior zone Z1 having a radial height h1 equal to D/3 and a maximum width W1 that is substantially constant, and a radially exterior zone Z2 having a radial height h2 equal to 2D/3 and a width W2,
• the tyre further comprising a crown reinforcement (3) radially on the inside of the tread (2),
• the crown reinforcement (3) comprising a working reinforcement (4) and a hoop reinforcement (5),
• the working reinforcement (4) comprising two working layers (41, 42) each comprising reinforcing elements which are coated in an elastomeric material, mutually parallel and respectively form, with a circumferential direction (XX') of the tyre, an oriented angle at least equal to 20° and at most equal to 50°, in terms of absolute value, and of opposite sign from one layer to the next,
• the said working layer reinforcing elements being made up of individual metal threads or monofilaments having a cross section the smallest dimension of which is at least equal to 0.20 mm and at most equal to 0.5 mm, and a breaking strength Rm,
• the density of reinforcing elements in each working layer being at least equal to 100 threads per dm and at most equal to 200 threads per dm,
• the hoop reinforcement (5) comprising at least one hooping layer comprising reinforcing elements which are mutually parallel and form, with the circumferential direction (XX') of the tyre, an angle B at most equal to 10°, in terms of absolute value,
**characterized in that** the the axially exterior major grooves (24) of the tread (2), of depth D, comprise, over at least 30% of their curvilinear length L, a radially interior zone Z1 having a maximum width W1 at least equal to 2 mm and a radially exterior zone Z2 having a width W2 at most equal to 1 mm over a radial height h3 at least equal to D/3,
**and in that** the breaking strength R_{c} of each working layer (41, 42) is at least equal to 30 000 N/dm, Rc being defined by : Rc= Rm*S*d, where Rm is the tensile breaking strength of the monofilaments in MPa, S is the cross-sectional area of the monofilaments in mm² and d is the density of monofilaments in the working layer considered, in number of monofilaments per dm.

2. Tyre according to Claim 1, **in which** the axially exterior major grooves (24) of the tread (2) comprise a radially interior zone Z1 having a width W1 at most equal to 8 mm.

3. Tyre according to one of Claims 1 and 2, **in which** the axially exterior major grooves (24) of the tread (2) comprise a radially exterior zone Z2 having a width W2 at least equal to 0.4 mm.

4. Tyre according to one of Claims 1 to 3, **in which** at least one axially exterior groove (24) opens axially on the outside of the tread (2).

5. Tyre according to one of claims 1 to 4, **in which** at least one axially exterior groove (24) opens axially on the inside of a circumferential groove (25) of the tread (2).

6. Tyre according to any one of Claims 1 to 5, **in which** the axially exterior major grooves (24) are spaced apart, in the circumferential direction (XX') of the tyre, by a circumferential spacing P at least equal to 8 mm.

7. Tyre according to any one of Claims 1 to 6, **in which** the the axially exterior major grooves (24) are spaced apart, in the circumferential direction (XX') of the tyre, by a circumferential spacing P at most equal to 50 mm.

8. Tyre according to any one of Claims 1 to 7, **in which** the radial distance D1 between the bottom face (243) of the axially exterior grooves (24) and the radially outermost reinforcing elements of the crown reinforcement (3) is at least equal to 1.5 mm.

9. Tyre according to any one of Claims 1 to 8, **in which** the radial distance D1 between the bottom face (243) of the axially exterior grooves (24) and the radially outermost reinforcing elements of the crown reinforcement (3) is at most equal to 3.5 mm.

10. Tyre according to any one of Claims 1 to 9, **in which** at least an axially exterior portion (23, 24) of the tread (2) comprises sipes (28) having a mean width w at most equal to 1 mm.

11. Tyre according to any one of Claims 1 to 10, **in which** the two axially exterior portions (22, 23) of the tread (2) each have an axial width (LS1, LS2) at most equal to 0.2 times the axial width LT.

12. Tyre according to any one of Claims 1 to 11, **in which** each working layer (41, 42) comprises reinforcing elements made up of individual metal threads or monofilaments having a diameter at least equal to 0.3 mm and at most equal to 0.37 mm.

13. Tyre according to any one of Claims 1 to 12, **in which** each working layer (41, 42) comprises reinforcing elements which form, with a circumferential direction (XX') of the tyre, an angle the absolute value of which is at least equal to 22° and at most equal to 35°.

14. Tyre according to any one of Claims 1 to 13, **in which** the density of reinforcing elements in each working layer (41, 42) is at least equal to 120 threads per dm and at most equal to 180 threads per dm.

15. Tyre according to any one of Claims 1 to 14, **in which** the reinforcing elements of the working layers (41, 42) are made of steel, preferably carbon steel.

16. Tyre according to any one of Claims 1 to 15, **in which** the reinforcing elements of the at least one hooping layer are made of textile, preferably of aliphatic polyamide, aromatic polyamide or combination of aliphatic polyamide and of aromatic polyamide, polyethylene terephthalate or rayon type.

17. Tyre according to any one of Claims 1 to 16, **in which** the hoop reinforcement (5) is radially on the outside of the working reinforcement (4).
